Europäisches Patentamt

European Patent Office

Office européen des brevets

(11) Numéro de publication: **0 169 126**
A1

# (12) DEMANDE DE BREVET EUROPEEN

(21) Numéro de dépôt: 85401287.9

(22) Date de dépôt: 25.06.85

(51) Int. Cl.⁴: **A 23 P 1/12,** A 23 P 1/14,
B 30 B 11/24

(30) Priorité: 27.06.84 FR 8410120
09.11.84 FR 8417080

(43) Date de publication de la demande: 22.01.86
Bulletin 86/4

(84) Etats contractants désignés: BE CH DE FR GB IT LI NL
SE

(71) Demandeur: CLEXTRAL, Tour Fiat 1 place de la Coupole,
F-92400 Courbevoie (FR)

(72) Inventeur: Chapet, Marc, 41 rue Emile Zola,
F-42240 Unieux (FR)

(74) Mandataire: Moncheny, Michel et al, c/o Cabinet
Lavoix 2 Place d'Estienne d'Orves, F-75441 Paris
Cedex 09 (FR)

(54) Procédé de traitement de matière par extrusion et installation de fabrication d'un produit alimentaire composite.

(57) L'invention a pour objet un procédé et une installation de fabrication d'un produit alimentaire composite à partir d'une machine d'extrusion comprenant au moins une vis (20) entraînée en rotation à l'intérieur d'un fourreau (1).

Selon l'invention, à la sortie de la première zone (I) de traitement formée par la machine d'extrusion, on fait tout d'abord passer la matière dans une seconde zone (II) limitée par un second fourreau (5) muni d'alésages (50, 51) séparant la matière en plusieurs flux indépendants (A, B, ...), chaque flux étant soumis à un traitement particulier, puis on amène les flux indépendants (A, B, ...) dans une troisième zone (III) de formation d'un produit unique.

La presente invention a pour objet un procédé perfectionné de traitement de matière par extrusion, une installation pour la mise en oeuvre du procédé et elle couvre également les produits réalisés selon le procédé.

On utilise des machines d'extrusion pour réaliser divers traitements sur des matières très variées. On peut par exemple réaliser dans des machines à vis des traitements de préparation et de mise en oeuvre de produits alimentaires, par exemple par cuisson-extrusion.

D'une façon générale, une machine d'extrusion à vis comprend un fourreau allongé enveloppant au moins une vis entraînée en rotation et sur laquelle sont fixés des organes de traitement tels que des filets enroulés en hélice autour de l'axe. Dans le cas d'une machine d'extrusion à plusieurs vis à axes parallèles, les vis sont placées à l'intérieur d'alésages sécants ménagés dans le fourreau et ayant des diamètres supérieurs à l'entr'axe de telle sorte que la matière alimentée par un orifice d'entrée placé à une extrémité amont du fourreau soit entraînée vers l'aval par l'effet combiné de la rotation des vis. Les filets peuvent avoir des sections à pas variés qui permettent de réaliser, de l'amont vers l'aval, divers traitements comme le mélange des constituants introduits par l'orifice d'entrée, le malaxage de la matière, la cuisson en couche mince dans le cas de produits alimentaires ; le fourreau pouvant être muni dans certaines sections de jaquettes chauffantes ou bien refroidies qui permettent de porter ou de maintenir le produit entraîné par les vis à une température déterminée.

Mais l'obtention en continu d'un produit

2

alimentaire composite c'est-à-dire comportant plusieurs zones colorées et/ou aromatisées différemment à partir d'une matière unique traitée dans une machine d'extrusion, pose des problèmes notamment au niveau de l'injection des différents colorants et arômes, et également au niveau de la formation de ces différentes zones sur un même produit.

Or les études qui ont conduit à l'invention ont permis d'observer qu'il était possible d'obtenir ce genre de produits nouveaux, ayant des caractéristiques particulièrement intéressantes.

Conformément à l'invention, à la sortie de la première zone de traitement formée par la ou les vis de la machine d'extrusion, on fait tout d'abord passer la matière dans une seconde zone de traitement dans laquelle ladite matière est séparée en plusieurs flux indépendants, chaque flux étant soumis à un traitement particulier, puis on amène les flux indépendants dans une troisième zone de formation d'un produit unique final.

L'invention permet de préparer un produit de la façon désirée, par exemple par cuisson-extrusion, dans la première zone de traitement puis de le séparer en plusieurs flux qui sont mélangés à des arômes ou des colorants différents dans les alésages séparés de la seconde zone.

Mais l'invention permet également, à partir d'un produit préalablement préparé dans la première zone de traitement, de le diviser en plusieurs flux soumis par exemple à des réactions chimiques différentes permettant par exemple de réaliser une expansion ou de la réduire ou bien de procurer des textures de nature différente.

L'invention couvre également une installa-

3

tion pour la réalisation du procédé, dans laquelle une première partie, comprenant au moins une vis entraînée en rotation à l'intérieur d'un fourreau allongé, est suivie par une seconde partie de traitement de la matière, limitée par un second fourreau muni d'alésages séparés de formation de plusieurs flux indépendants de matière, débouchant dans une troisième partie formée par une filière comportant au moins un conduit d'extrusion de longueur et de section déterminées.

Mais l'invention sera mieux comprise par la description détaillée de plusieurs modes de réalisation donnés à titre d'exemple et représentés sur les dessins annexés.

La Fig. 1 est une vue schématique en coupe axiale d'un premier mode de réalisation de l'invention.

La Fig. 2 est une vue schématique en coupe axiale d'un second mode de réalisation de l'invention.

La Fig. 3 et la Fig. 4 sont deux coupes transversales suivant des plans AA et BB de la Fig. 2.

Les Fig. 5 et 6 sont des variantes de réalisation de la filière d'extrusion.

Les Fig. 7 et 8 montrent en coupe transversale deux exemples de produits réalisés par le procédé selon l'invention.

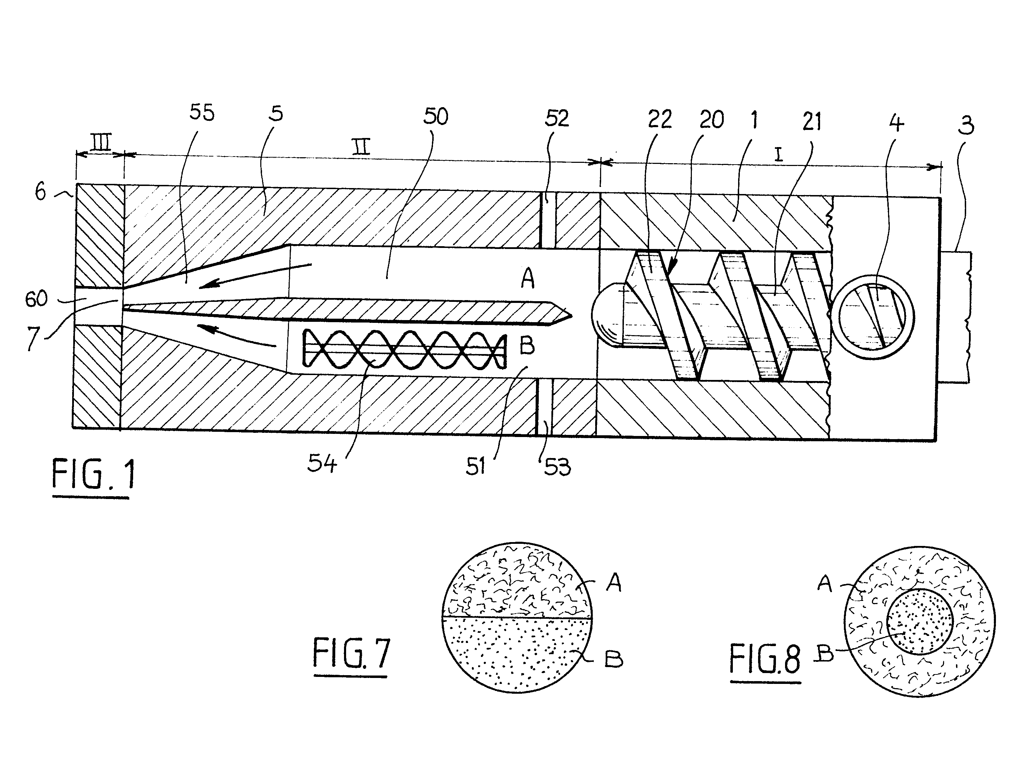

Sur la Fig. 1, on a représenté schématiquement une installation pour la mise en oeuvre du procédé selon l'invention, formée par une machine comprenant plusieurs zones de traitement.

La zone amont I est constituée par une machine d'extrusion classique à une vis. Elle comprend donc un fourreau allongé 1 dans lequel est placée une vis 20 entraînée en rotation par un groupe motoréducteur 3. La vis 20 est constituée d'un arbre central

4

d'entraînement 21 sur lequel est enroulé en hélice un filet 22. Le pas et la profondeur du filet 22 sont déterminés en fonction du traitement que l'on désire effectuer sur la matière introduite par un orifice d'alimentation 4 ménagé à l'extrémité amont du fourreau et entraînée vers l'aval par la rotation de la vis 20.

D'autre part, sur une section déterminée du fourreau 1, celui-ci peut être entouré d'une jaquette, non représentée, permettant de réaliser un chauffage ou un refroidissement, et par conséquent de porter la matière à une température voulue ou bien de réguler celle-ci.

La zone amont I est suivie par une seconde zone II dans laquelle pourront être effectués des traitements séparés.

A cet effet, le fourreau 1 est prolongé par un second fourreau 5 dans lequel sont ménagés deux alésages séparés 50 et 51 pour la formation de deux flux indépendants A et B de la matière préparée dans la zone I. Le fourreau 5 est muni de deux orifices 52 et 53 débouchant dans les deux alésages 50 et 51, et qui permettent d'introduire des produits différents dans les deux flux A et B de matière. Il est également possible de placer dans l'un ou les deux alésages 50 et 51, un mélangeur statique 54 pour homogénéiser le flux de matière correspondant. Les alésages 50, 51 se terminent par un convergent commun 55 qui débouche sur un orifice unique 7.

Cette seconde zone de traitement II est suivie par une troisième zone III formée par une filière 6 munie d'un conduit central d'extrusion 60. Ce conduit d'extrusion 60 a une longueur déterminée pour que les flux A et B s'appliquent l'un contre l'autre et se solidarisent entre eux comme on le verra ultérieurement.

Grâce à cette disposition, la matière alimentée par l'orifice d'entrée 4 est soumise au traitement voulu dans la première zone I de la machine, puis se divise en deux flux indépendants A et B dans la seconde zone II. Cette seconde zone permet d'appliquer des traitements différents aux deux flux provenant de la même matière et, en particulier, d'introduire par les orifices 52 et 53 des colorants et/ou des arômes différents, le mélangeur statique 54 permettant ainsi d'homogénéiser le mélange.

Ensuite, les deux flux A et B, ayant subi un traitement différent, sont canalisés par le convergent 55 vers le conduit d'extrusion 60 de la filière 6, où ils se regroupent en un flux unique. A la sortie de la filière 6, la matière débouche à une certaine pression et est soumise à la pression atmosphérique, et le choc dû à cette différence de pression brutale détermine une expansion de la matière.

Dans le conduit d'extrusion 60, les deux flux A et B sont maintenus appliqués l'un contre l'autre sur toute la longueur dudit conduit pour réaliser le collage de ces deux flux entre eux et obtenir en continu, à la sortie de la filière, un produit final comportant sur la tranche et sur toute la longueur deux zones colorées et/ou aromatisées différemment comme représenté sur la figure 7 où l'on retrouve les deux flux A et B collés l'un sur l'autre.

La solidarisation des deux flux est obtenue d'une part grâce à l'écoulement symétrique dans la seconde zone II des flux A et B qui sont maintenus à la même vitesse et à la même température de façon à conserver les mêmes caractéristiques à la matière et d'autre part grâce à la longueur du conduit d'extru-

6

sion 60 qui, pendant un temps déterminé, exerce une pression suffisante sur ces deux flux.

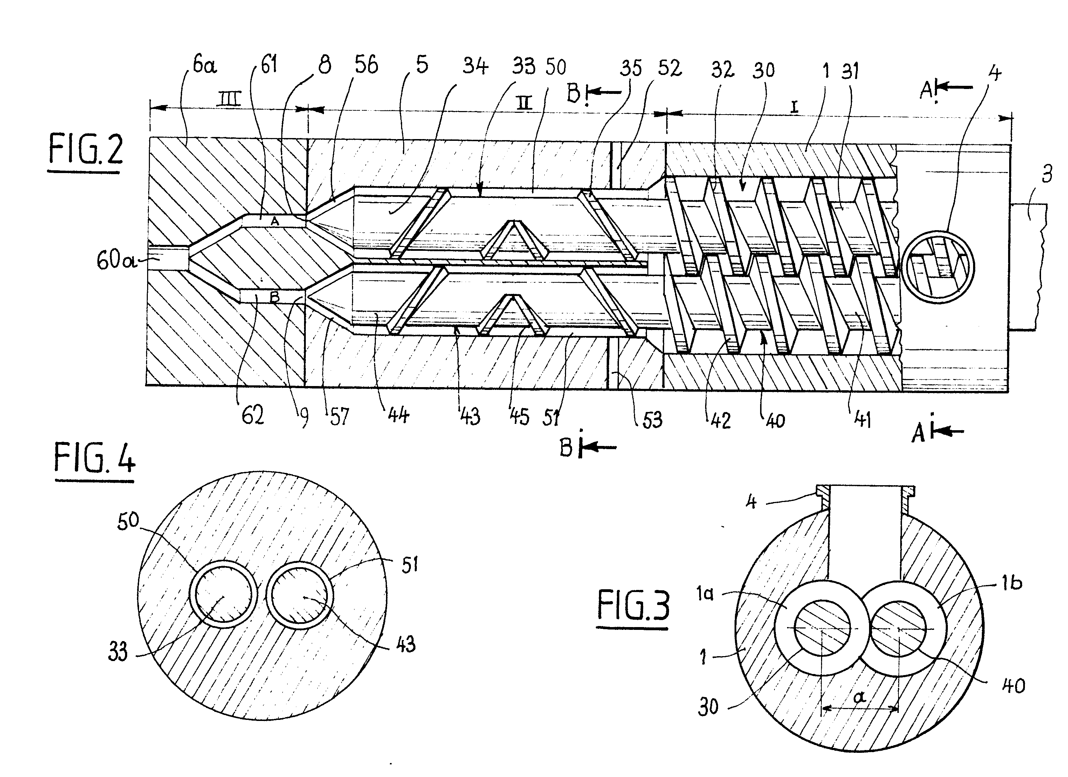

Sur la Fig. 2, représentant un second mode de réalisation, la zone amont I est constituée par une machine d'extrusion classique à deux vis. Elle comprend également un fourreau allongé 1 dans lequel sont placées deux vis 30 et 40 entraînées en rotation autour de leurs axes parallèles par un groupe motoréducteur 3. Chaque vis est constituée d'un arbre central d'entraînement 31, 41 sur lequel sont enroulés en hélice des filets 32 et 42 qui s'engrènent l'un dans l'autre. Les deux vis peuvent être constituées de sections successives à pas différents permettant de soumettre à des traitements variés la matière introduite par l'orifice d'alimentation 4 ménagé à l'extrémité amont du fourreau et entraînée vers l'aval par la rotation des vis.

Comme on le voit sur la Fig. 3, le fourreau 1 est muni de deux alésages 1a et 1b de diamètres égaux, au jeu près, à celui des deux vis et par conséquent supérieur à l'entr'axe (a), les deux alésages étant donc sécants dans une zone médiane correspondante à l'engrènement des deux vis.

D'autre part, sur une section déterminée du fourreau 1, celui-ci peut être entouré d'une jaquette permettant de réaliser un chauffage ou un refroidissement et par conséquent de porter la matière à une température voulue ou bien de réguler celle-ci.

En fonction du profil donné aux deux vis, on peut donc effectuer à l'intérieur de la section I de la machine tout traitement connu de la matière.

La zone amont I est également suivie par une seconde zone II dans laquelle pourront être effectués des traitements séparés. Le fourreau 1 est donc prolongé par un second fourreau 5 dans lequel sont ménagés deux alésages séparés 50 et 51 pour la formation de deux flux indépendants A et B de la matière préparée dans la zone I. La somme des rayons des deux alésages séparés 50 et 51 est inférieure à l'entr'axe (a) des deux vis. De la sorte, comme on l'a représenté sur la Fig. 4, les deux alésages 50 et 51 ne sont pas sécants.

Les deux vis 30 et 40 sont prolongées chacune dans l'alésage correspondant 50, 51, par une partie aval, respectivement 33, 43, qui est enfilée à l'intérieur de l'alésage correspondant 50, 51. Chaque vis 33, 43 est constituée par un arbre, respectivement 34 et 44 sur lequel est enroulé un filetage hélicoïdal, respectivement 35 et 45. Les deux arbres 34, 44 sont placés dans le prolongement des arbres 31, 41 des deux vis 30,40 et entraînés en rotation avec ces derniers. Les filets 35, 45 ont des diamètres égaux, au jeu près, à ceux des alésages 50 et 51. Comme dans l'exemple précédent, le fourreau 5 est muni de deux orifices 52 et 53 débouchant dans les deux alésages 50 et 51, et qui permettent d'introduire des additifs différents dans les deux flux A et B de matière.

Par ailleurs, chaque alésage 50, 51 se prolonge par un convergent 56 et 57 se terminant par un orifice respectivement 8 et 9. Chaque vis 33, 43 est munie d'une pointe pénétrant dans le convergent correspondant.

La zone de traitement II constituée par le fourreau 5 est suivie par une troisième zone III formée par une filière 6a. Cette filière 6a comporte pour chaque flux A et B, en face de chaque orifice 8, 9, un canal de distribution respectivement 61 et 62, symétrique l'un par rapport à l'autre, et qui converge

8

vers un conduit commun d'extrusion 60a.

Dans ce mode de réalisation avec une machine à deux vis, la matière alimentée par l'orifice d'entrée 4 est soumise au traitement voulu dans la première zone I, puis se divise dans la zone II en deux flux indépendants A et B entraînés par les vis 33, 43 qui fonctionnent en mono-vis. Cette seconde zone II permet d'introduire par les orifices 52 et 53 des colorants et/ou des arômes différents, les vis 33 et 43 permettant d'homogénéiser le mélange dans chaque flux.

Ensuite, les deux flux A et B, ayant subi un traitement différent, sont canalisés par les convergents 56 et 57 vers les canaux de distribution 61, 62, puis ils se regroupent en un flux unique dans le conduit d'extrusion 60a de la filière 6a. Dans ce conduit 60a, les deux flux A et B se solidarisent entre eux pour les raisons indiquées précédemment.

On obtient donc, à partir d'une même matière traitée dans une machine à deux vis, un produit final comportant deux zones colorées et/ou aromatisées différemment.

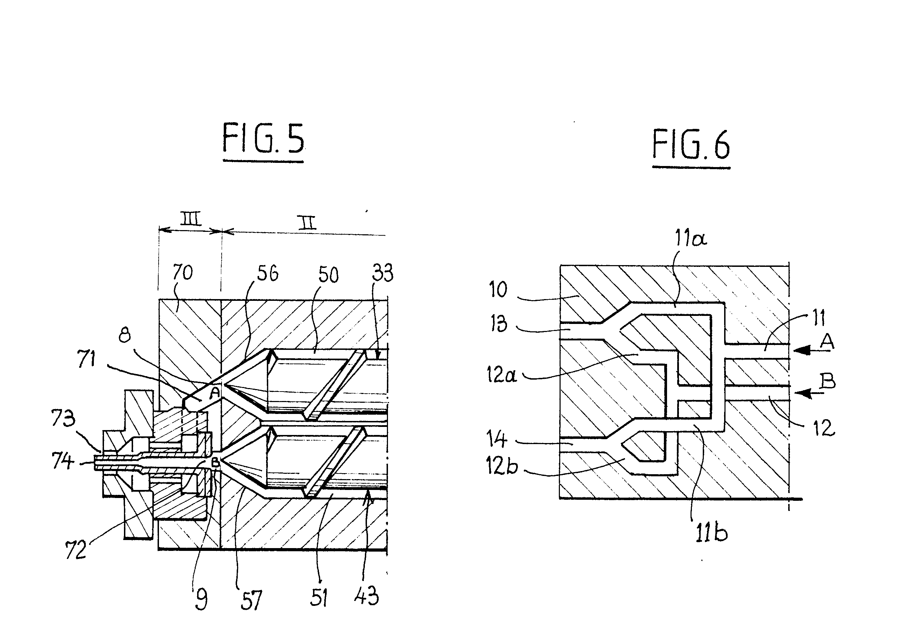

Grâce à l'invention, on peut aussi faire déboucher les deux monovis 44, 43 dans des filières concentriques (Fig. 5) qui permettent, par co-extrusion, de réaliser un produit fourré.

Dans ce mode de réalisation, la troisième zone III est formée par une filière 70 comportant, pour chaque flux A et B, en face de chaque orifice 8, 9, un canal de distribution respectivement 71 et 72. Chaque canal de distribution 71 et 72 débouche dans un conduit d'extrusion 73 et 74, le conduit 74 étant concentrique au conduit 73. Le flux A est donc dirigé par le canal de distribution 71 vers le conduit 73 pour former la matière externe du produit tandis que le flux B est dirigé par le canal 72 vers le conduit 74 pour constituer le fourrage. On voit donc qu'à partir d'une même matière première, il sera possible de réaliser un produit, comme représenté sur la Fig. 8, de fourrage et de couverture différents par leur goût, leur texture ou leur aspect.

Pour augmenter le débit du produit final, la filière peut évidemment comporter plusieurs conduits d'extrusion comme représentée sur la Fig. 6. Dans ce cas, pour chaque flux A et B, les canaux de distribution 11 et 12 de la filière 10 se divisent en sous-canaux, respectivement 11a, 11b et 12a, 12b, qui convergent deux par deux vers un conduit d'extrusion 13, 14. Le trajet d'écoulement pour chaque flux A et B, dans les canaux et les sous-canaux est symétrique.

Enfin, les machines décrites ci-dessus peuvent être complétées par un dispositif de coupe des produits extrudés. On peut aussi faire varier la section des filières d'extrusion pour extruder des produits de formes différentes. D'autre part, on peut également séparer la matière sortant de la première zone de traitement, en plusieurs flux indépendants et leur faire subir des traitements différents, puis les regrouper dans un conduit d'extrusion unique afin d'obtenir un produit final comportant, sur la tranche et sur toute la longueur, plusieurs secteurs colorés et/ou aromatisés différemment.

Grâce à l'invention, on peut ainsi extruder sur la même machine et à partir d'une même matière, un produit alimentaire composite sans qu'il soit nécessaire de fabriquer les différents éléments séparément ou d'utiliser plusieurs machines.

D'une façon générale, l'invention peut faire l'objet de diverses variantes et perfectionnements en restant dans le cadre de protection revendiquée.

10

<u>REVENDICATIONS</u>

1.- Procédé de traitement de matière par extrusion dans une machine comprenant au moins une vis (20, 30, 40) entraînée en rotation autour d'un fourreau allongé (1) et munie de filets hélicoïdaux qui entraînent vers l'aval la matière introduite par un orifice d'entrée (4) placé à l'extrémité amont du fourreau (1), caractérisé par le fait qu'à la sortie de cette première zone I de traitement, on fait passer la matière dans une seconde zone II de traitement limitée par un second fourreau (5) et dans laquelle ladite matière est séparée en plusieurs flux indépendants (A, B, ...), chaque flux étant soumis à un traitement particulier, puis on amène les flux indépendants (A, B, ...) dans une troisième zone III de formation d'un produit unique final.

2.- Procédé de traitement selon la revendication 1, caractérisé par le fait que les flux indépendants (A, B, ...) de matière préparée dans la première zone I de traitement sont mélangés à des colorants différents dans la seconde zone II.

3.- Procédé de traitement selon la revendication 1, caractérisé par le fait que les flux indépendants (A, B, ...) de matière préparée dans la première zone I de traitement sont mélangés à des arômes différents dans la seconde zone II.

4.- Procédé de traitement selon l'une des revendications précédentes, caractérisé par le fait que, dans la troisième zone III, on regroupe les flux indépendants (A, B, ...) de matière, en un flux unique dans une filière (6a, 10) comportant au moins un conduit d'extrusion (60a, 13, 14), les conditions d'extrusion étant déterminées de telle sorte que, dans ledit conduit d'extrusion, les flux indépendants (A, B, ...) s'appliquent les uns contre les autres et se solidarisent entre eux.

5.- Procédé de traitement selon la revendication 4, caractérisé par le fait que le conduit d'extrusion (6a, 13, 14) de la filière (6a, 10) exerce, sur le flux de matière, une pression suffisante pendant un temps et sur une longueur déterminés, pour qu'avant expansion, les flux indépendants (A, B, ...) se collent entre eux et forment un produit unique.

6.- Procédé de traitement selon l'une des revendications 1 à 3, caractérisé par le fait que, dans la troisième zone III, on fait passer les flux indépendants (A, B, ...) de matière dans une filière (70) comportant deux conduits concentriques (73, 74) pour la réalisation d'un produit fourré par co-extrusion.

7.- Procédé de traitement selon l'une des revendications précédentes, caractérisé par le fait que le produit alimentaire comporte sur la tranche et sur la longueur plusieurs zones colorées et/ou aromatisées différemment.

8.- Installation de fabrication d'un produit alimentaire composite par extrusion dans une machine comprenant une vis (20) entraînée en rotation à l'intérieur d'un fourreau allongé (1) et munie de filets hélicoïdaux (22) qui entraînent vers l'aval la matière introduite par un orifice d'entrée (4) placée à l'extrémité amont du fourreau (1), caractérisée par le fait qu'elle comprend une seconde partie II de traitement de la matière, limitée par un second fourreau (5) muni d'alésages séparés (50, 51) de formation de plusieurs flux indépendants (A, B, ...) de matière, débouchant par l'intermédiaire d'un convergent commun (55) dans une troisième partie III formée par une fi-

12

lière (6) comportant un conduit central d'extrusion (60) de longueur et de section déterminées.

9.- Installation de fabrication d'un produit alimentaire composite par extrusion dans une machine comprenant un fourreau allongé (1) enveloppant au moins deux vis (30, 40) à axes parallèles constituées chacune d'un arbre central d'entraînement (31, 41) et de filets (32, 42) enroulés en hélice, la matière étant alimentée par un orifice d'entrée (4) placé à une extrémité amont du fourreau( 1), puis entraînée en vers l'aval par la rotation des vis, caractérisée par le fait qu'elle comprend une seconde partie II de traitement de la matière, limitée par un second fourreau (5) muni d'alésages séparés (50, 51) de formation de plusieurs flux indépendants (A, B, ...) de matière, centrés sur les axes des vis (30, 40), lesdites vis étant prolongées chacune à l'intérieur de l'alésage (50, 51) correspondant par une partie aval (33, 43) fonctionnant en monovis et munie de filets (35, 45), et chacun desdits alésages de la seconde partie débouchant dans une troisième partie III formée par une filière (6a, 10, 70).

10.- Installation de fabrication selon les revendications 8 et 9, caractérisée par le fait que les alésages séparés (50, 51) sont munis d'orifices (52, 53) pour l'introduction de colorants et/ou d'arômes différents dans les flux de matière (A, B, ...).

11.- Installation de fabrication selon la revendication 9, caractérisée par le fait que chacun des alésages séparés (50, 51) de la seconde partie II débouche dans la filière (6a, 10) de la troisième partie III par l'intermédiaire d'un convergent (56, 57).

13

12.- Installation de fabrication selon les revendications 9 et 11 caractérisée par le fait que la filière (6a, 10) de la troisième partie III est munie de canaux de distribution symétriques (61, 62, 11, 12) placés chacun en face d'un des convergents (56, 57) et qui convergent vers un conduit commun d'extrusion (60a, 13, 14) de longueur et de section déterminées.

13.- Installation de fabrication selon la revendication 12, caractérisée par le fait que les canaux de distribution (11-12) se divisent en sous-canaux de distribution (11a, 11b, 12a, 12b) convergeant deux par deux vers un conduit d'extrusion (13, 14).

0169126

FIG. 1

FIG.7

FIG.8

0169126

FIG.2

FIG.3

FIG.4

FIG.5

FIG.6

Office européen
des brevets

**RAPPORT DE RECHERCHE EUROPEENNE**

0169126

Numero de la demande

EP  85 40 1287

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | DE-A-3 021 578  (W. LOSER & SOHN)<br>* Revendications 1-3; figures 1,2 * | 1,4,8, 9 | A 23 P    1/12<br>A 23 P    1/14<br>B 30 B   11/24 |
| A | US-A-3 143 767  (T. WIRTH)<br><br>* Revendication 1; figure 2 * | 1,4,8, 9 | |
| A | US-A-3 876 743  (C. SODERLUND)<br>* Revendication 1; colonne 1, lignes 10-43; colonne 1, ligne 56 - colonne 2, ligne 52 * | 1-3 | |
| A | US-A-3 482 992  (J. BENSON)<br>* Revendication 1; colonne 3, lignes 8-73; figures 1,4 * | 1,5 | |
| A | GB-A-2 005 587  (UNILEVER)<br>* Revendications 1,8; figure 1 * | 1,2,8 | **DOMAINES TECHNIQUES RECHERCHES (Int. Cl.4)** |
| A | FR-A-  847 554  (J. DELORME) | | A 23 P<br>A 23 L<br>B 30 B<br>B 29 F<br>A 21 C |
| A | US-A-2 856 868  (K. KENNEDY) | | |
| A | US-A-3 947 200  (C. FISHER) | | |

Le présent rapport de recherche a été établi pour toutes les revendications

| Lieu de la recherche<br>LA HAYE | Date d'achèvement de la recherche<br>04-10-1985 | Examinateur<br>DESMEDT G.R.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82